# EUROPEAN PATENT SPECIFICATION

(11) **EP 3 282 893 B1**
(45) Date of publication and mention of the grant of the patent: **21.10.2020**
(21) Application number: 16734475.3
(22) Date of filing: 14.04.2016
(51) Int. Cl.: A47B 9/02, A47B 97/06, F16M 11/04, A47B 9/12

(54) **RECTANGULAR FRAME WITH HEIGHT ADJUSTMENT FOR A FIRST AND/OR SECOND DEVICE FOR COUPLING TO THE FRAME**
RECHTECKIGER RAHMEN MIT HÖHENVERSTELLUNG FÜR EINE ERSTE UND/ODER ZWEITE VORRICHTUNG ZUR ANKOPPLUNG AN DEN RAHMEN
CADRE RECTANGULAIRE À HAUTEUR RÉGLABLE POUR UN PREMIER ET/OU UN SECOND DISPOSITIF À COUPLER AU CADRE

(30) Priority: 17.04.2015 NL 2014654
(43) Date of publication of application: 21.02.2018
(73) Proprietor: Markant International B.V., 3992 AD Houten (NL)
(72) Inventor: TEN CATE, Eric, 7775 AK Lutten (NL)
(74) Representative: Mink-Lindenburg, Charlotte Hildegard
(86) International application number: PCT/NL2016/050260
(87) International publication number: WO 2016/167656

(56) References cited:
- WO-A1-03/103447
- GB-A- 1 005 570
- GB-A- 2 501 054
- US-A- 3 188 986

## Description

The invention relates to a rectangular frame, which frame is formed by at least a first upright, upper beam, second upright and lower beam, wherein the frame is provided with first coupling means and the frame is configured for coupling of a first device, such as a desk top, black/whiteboard or painting, to a first side of the frame by means of the first coupling means.

A rectangular frame according to the invention is known in the field. GB1005570A and WO03/103447A1 show similar frames which are considered useful for understanding the invention.

The known frame has the drawback that the device, after being coupled to the frame, is connected rigidly to the frame.

It is an object of the invention to provide a frame according to the preamble in which the above stated drawback is obviated.

The frame according to the invention has for this purpose the feature that the frame is also configured for adjustable placing of the first device in the height relative to the frame, wherein the frame is provided with first adjusting means for adjusting the first coupling means and a first operating member for operating the first adjusting means, wherein the first coupling means comprise a first and second coupling element, which first and second coupling elements are arranged for simultaneous adjustable displacement to substantially the same height in respectively the first and second upright and are connected respectively by means of a first and second cord to the first adjusting means, wherein the first adjusting means comprise at least one constant-force spring, wherein a first outer end of each constant-force spring is connected to both the first and the second cord.

The frame according to the invention can be applied as sub-frame for a desk, wherein the frame allows a height adjustment of a desk top.

Another application for the frame according to the invention is making a flat device, such as for instance a painting, black/whiteboard, television etc. for hanging, height-adjustable on a vertical surface such as a wall.

Because the frame according to the invention can be utilized for multiple applications and is not limited to one application, such as making desks height-adjustable, the production of the frame in large numbers is economically feasible.

Through the use of one or more constant-force springs the frame according to the invention does not depend on electricity, thereby further increasing the utility of the frame. In addition, the correct force springs can be chosen subject to the weight of the device in order to enable movement of the device in the height using the spring force of the constant-force springs and gravitational force.

The constant-force springs produce a constant force over a long spring travel, whereby a user of the frame according to the invention can exert a uniform force on the device during displacement of the device in the height.

In a first embodiment of the frame according to the invention the frame is also configured for adjusting in the height relative to the frame a second device, such as a desk top, black/whiteboard or painting, for coupling to a second side of the frame. The frame is provided for this purpose with second coupling means for coupling of the second device, second adjusting means for adjusting the second coupling means and a second operating member for operating the second adjusting means, wherein the second coupling means comprise a third and fourth coupling element, which third and fourth coupling elements are arranged for simultaneous adjustable displacement to substantially the same height in respectively the first and second upright, and are connected respectively by means of a third and fourth cord to the second adjusting means, wherein the second adjusting means comprise at least one constant-force spring, wherein a first outer end of each constant-force spring of the second adjusting means is connected to both the third and the fourth cord.

These technical measures make it possible to place a second device on another side of the frame, whereby the possible applications of the frame according to the invention are further increased. With the first embodiment it becomes possible for instance to design a desk wherein a desk top (the first and second device) is coupled to the frame on either side of the frame.

The first and/or second adjusting means preferably comprise a housing which substantially comprises each constant-force spring in unloaded state, wherein a second outer end of each constant-force spring is connected fixedly to the housing.

It is possible by means of the housing to place and remove the adjusting means in simple manner. In addition, different versions of the adjusting means can be produced with different force springs, wherein the correct version of the adjusting means can be applied in the frame according to the invention depending on the weight of the first and/or second device.

In each embodiment of the frame according to the invention each constant-force spring or a set of constant-force springs is preferably provided with a brake which engages on the constant-force spring, and which brake can be operated via the first and/or second operating member. Using the brake the device can be locked in a simple manner at a height to be determined by a user.

The brakes of each constant-force spring are preferably mutually connected here by means of a brake cable and the first and/or second operating member engages on the brake cable.

In a preferred embodiment of the frame according to the invention the first and/or second adjusting means comprise a number of, preferably two, pairs of constant-force springs, wherein each force spring comprises a rolled-up leaf spring, and each pair of leaf springs is placed in mirrored arrangement in the housing such that the outer sides of the unrolled parts of each pair of leaf springs are adjacent. The start of each leaf spring, for instance the first 5 cm, is preferably flat here.

This arrangement of the leaf springs in the housing ensures that the leaf springs unwind in a straight line.

In said embodiments the first adjusting means are preferably placed close to a bottom corner of the frame formed by the first upright or the second upright and the lower beam, and the first and second cords are connected to the first adjusting means at an angle of about 30 to 60 degrees relative to the lower beam. Because of these measures the one or more constant-force springs of the first adjusting means have an extension which is greater than the height of the frame.

In a configuration of the frame according to the invention in which the frame is low in relation to the height thereof, the first adjusting means can also be mounted on a first upright. The first and second cords are then preferably guided horizontally to the first adjusting means via a roller on the second upright.

In similar manner the second adjusting means are preferably placed close to a bottom corner of the frame and the third and fourth cords are connected to the second adjusting means at an angle of about 30 to 60 degrees relative to the lower beam.

The first and second adjusting means are preferably placed here close to different bottom corners.

In order to enable setting of the pulling force of the first adjusting means, in an optimal embodiment of the invention the first adjusting means are arranged for displacement along a first path in the frame and the first and second cords are connected to the first adjusting means (7) at an angle adjustable relative to the first path.

The frame is preferably provided here with a first guide channel which is mounted rotatably at a first outer end on the frame and which extends from the first outer end substantially in the direction of the first path. The angle between the longitudinal direction of the first guide channel and the first path is for this purpose adjustable. The first adjusting means are also connected to the first and second cords by means of a first guide element, wherein the first guide element is displaceable in guiding manner between the first and a second outer end of the first guide channel.

These measures enable the pulling force of the first adjusting means to be adapted to the weight of for instance a tabletop and the articles lying thereon.

The second adjusting means are preferably also arranged for displacement along a second path in the frame and the third and fourth cords are connected to the second displacing means at an angle adjustable relative to the second path.

The frame is preferably provided for this purpose with a second guide channel which is mounted rotatably at a first outer end on the frame and which extends from the first outer end substantially in the direction of the second path. The angle between the longitudinal direction of the second guide channel and the second path is for this purpose adjustable. The second adjusting means are also connected to the third and fourth cords by means of a second guide element, wherein the second guide element is displaceable in guiding manner between the first and a second outer end of the second guide channel.

These measures enable the pulling force of the second adjusting means to be also adapted to the weight of for instance a tabletop and the articles lying thereon.

In a further embodiment of the frame according to the invention which is particularly suitable for mounting on a wall, the first coupling element and second coupling element are mutually connected by means of a connecting element. The first device can be attached to the connecting element.

In this embodiment the first adjusting means are preferably arranged close to the centre of the lower beam.

In order to further increase the possible applications of the frame according to the invention the upper beam and lower beam are preferably adjustable in the length. The inventive frame can hereby be adapted for instance to the width of the desk top or to the width of a painting or black/whiteboard.

In order to facilitate the change of the width of the frame, the first, second, third and/or fourth cord preferably comprise a Bowden cable. The cords need not hereby be adjusted in the length when the width of the frame is changed.

Making the first and second uprights height-adjustable further increases the possible applications of the frame according to the invention.

The first and/or second side of the first and second uprights are preferably provided with a guide track which is configured to enclose a coupling element and to guide the coupling element in the height.

The invention will be further elucidated on the basis of the following figures, in which:
Figure 1 shows the first preferred embodiment of the frame according to the invention;
Figure 2 shows a second preferred embodiment of the frame according to the invention;
Figure 3 shows a further development of the first coupling means for coupling of the device according to Figure 2;
Figure 4 shows a preferred embodiment of the first or second adjusting means;
Figure 5 shows the first or second adjusting means according to Figure 4 in loaded state;
Figure 6 shows an application of the frame according to Figure 2 in a desk with a double top;
Figure 7 shows a further embodiment of the frame according to the invention;
Figure 8 shows an optimized embodiment of the frame according to the invention;
Figure 9 shows a module for use in the frame according to the invention.

The same components are designated by the same numerals in the different figures.

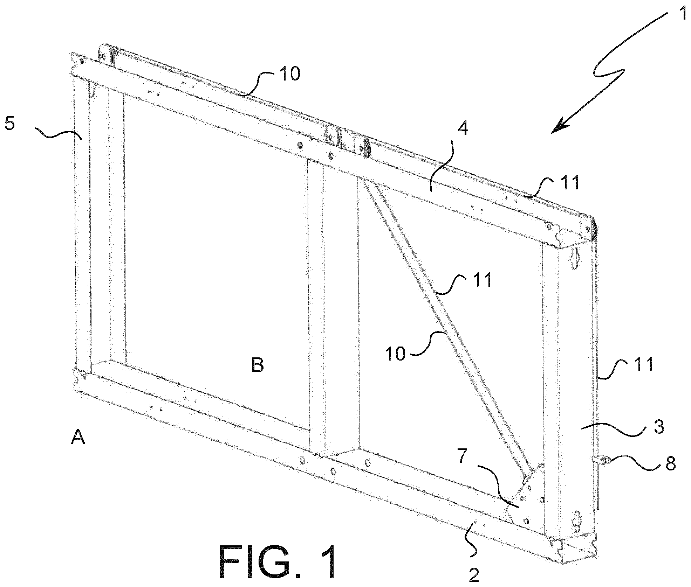

Figure 1 shows the first preferred embodiment of frame 1 according to the invention. Frame 1 is rectangular and is formed by at least a first upright 3, upper beam 4, second upright 5 and lower beam 2. Frame 1 is intended for the purpose of height adjustment relative to frame 1 of a first device, such as a desk top, black/whiteboard or painting, to be coupled to a first side A of frame 1.

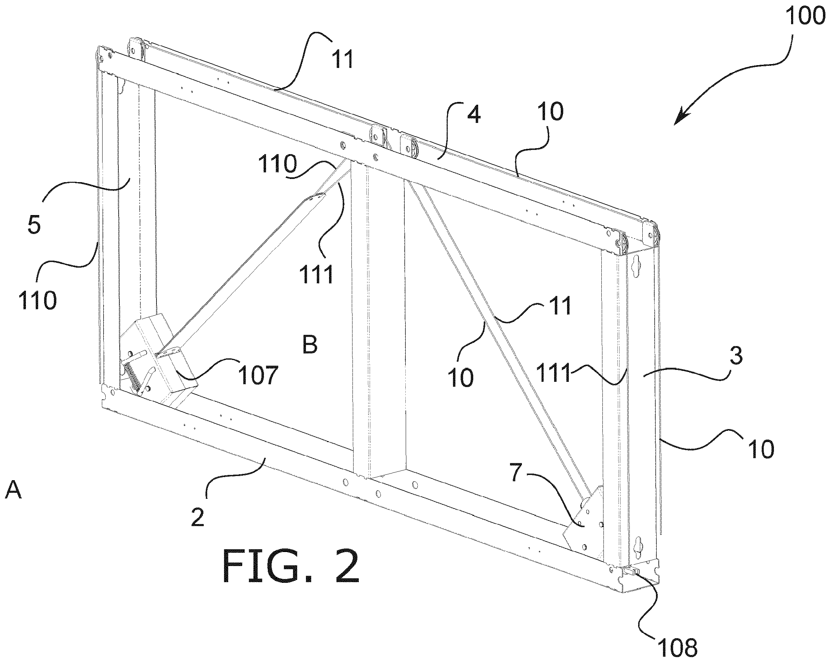

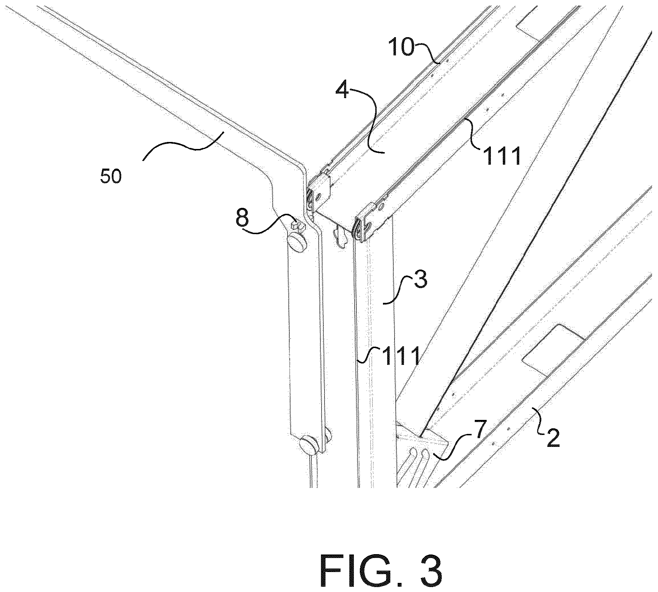

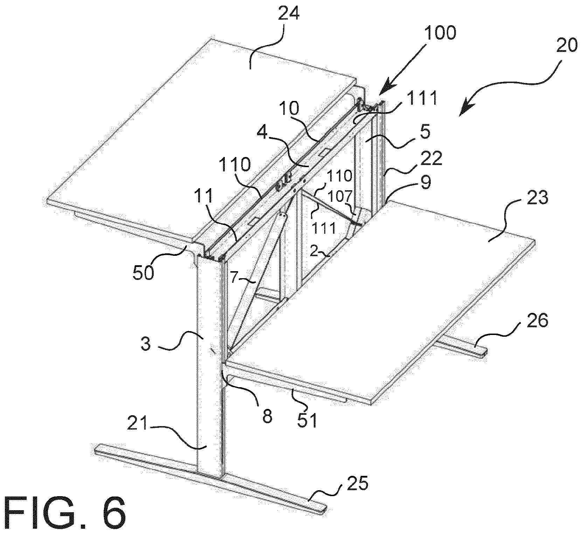

Frame 1 is provided with first coupling means for coupling of the device. The first coupling means will be further elucidated in Figure 2. Frame 1 further comprises first adjusting means 7 for adjusting the first coupling means and a first operating member for operating the first adjusting means. The first operating member is not shown. The first coupling means comprise a first and second coupling element 8, 9 (see Figure 6). The first and second coupling elements 8, 9 are arranged for simultaneous adjustable displacement to substantially the same height in respectively the first and second upright 3, 5. Coupling elements 8, 9 are connected to first adjusting means 7 by means of a first and second cord 10, 11 respectively. First adjusting means 7 will be further elucidated in Figure 3. First adjusting means 7 are placed close to a bottom corner of the frame, which bottom corner is formed by the angle between lower beam 2 and first upright 3 or the angle between lower beam 2 and second upright 5. First and second cords 10, 11 preferably lie at an angle here of about 30 to 60 degrees relative to lower beam 3. As a result first and second cords 10, 11 are guided via an opening close to the centre of upper beam 4 to first adjusting means 7.

In order to couple frame 1 to different devices of differing widths the length of upper beam 4 and lower beam 2 is preferably adjustable. This can be achieved by embodying both upper beam 4 and lower beam 2 as two parts for sliding into each other.

In addition, first and second uprights 3, 5 are preferably height-adjustable. This can be achieved by embodying both the first and second uprights 3, 5 as two parts for sliding into each other.

Figure 2 shows a second preferred embodiment of frame 100 according to the invention, wherein frame 100 is also provided with second coupling means for coupling the second device. The second coupling means operate in the same way as first coupling means but are connected via third and fourth cord 110, 111 to second adjusting means 107. The second coupling means are intended for coupling of a second device to a side B of frame 100 lying opposite side A.

Figure 3 shows a further development of the first coupling means for coupling the device according to Figure 2. The first coupling means comprise a first and second coupling element 8, 9 Coupling element 8 is arranged in first upright 3. Coupling element 9 is arranged in second upright 5 and is not shown, but operates in the same way as coupling element 8. Coupling element 8 is connected via first cord 10 to first adjusting means 7. Coupling element 8 is configured for coupling to a first device 50, such as a support beam for a desk top. Both the first and the second upright 3, 5 are provided with a guide track configured to enclose respective coupling elements 8, 9 and to guide the respective coupling elements 8, 9 in the height. First and second uprights 3, 5 are preferably embodied as a profile in which the guide track is arranged.

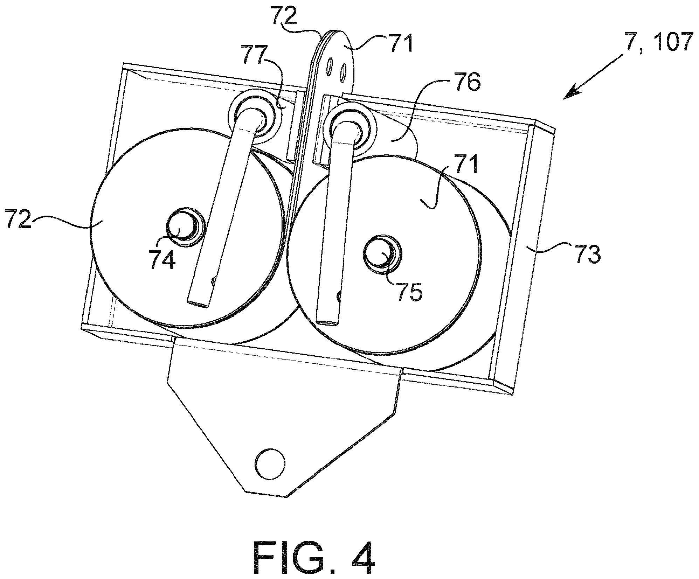

Figure 4 shows a further development of the first and second coupling means for coupling of a first and second device as according to Figure 2. The second coupling means comprise a first and second coupling element 108, 109. Coupling element 108 is arranged in first upright 3. Coupling element 109 is arranged in second upright 5 and is not shown but operates in the same way as coupling element 108. In similar manner to coupling element 8, coupling element 108 is connected via third cord 110 to second adjusting means 107. Coupling elements 108, 109 are configured for coupling to a second device such as a desk top.

Second adjusting means 107 are preferably also placed close to a bottom corner of frame 100, which bottom corner is formed by the angle between lower beam 2 and first upright 3 or the angle between lower beam 2 and second upright 5. Third and fourth cords 110, 111 preferably lie at an angle here of about 30 to 60 degrees relative to lower beam 3. As a result third and fourth cords 110, 111 are guided via an opening close to the centre of upper beam 4 to second adjusting means 107.

In order to facilitate adjustment of the width of frame 1 or 100 without changing the length of the first, second, third or fourth cable 10, 11, 110, 111, the first, second, third and/or fourth cables 10, 11, 110, 111 at least partially comprise a Bowden cable.

Figure 4 shows a preferred embodiment of the first or second adjusting means 7, 107. Adjusting means 7, 107 comprise two constant-force springs 71, 72, wherein a first outer end of each constant-force spring 71, 72 is connected to the first and the second cord 10, 11 or the third and fourth cord 110, 111. The constant-force springs 71, 72 each comprise a rolled-up leaf spring. The leaf springs are placed in mirrored arrangement in a housing 73 such that the outer sides of the parts unrolled from the leaf springs are adjacent. Housing 73 is provided for this purpose with the two shafts 74, 75 on which force spring 71 and force spring 72 are respectively arranged. Adjusting means 7, 107 are provided with brakes 76, 77 which engage on constant-force springs 71, 72. Brakes 76, 77 can be operated via the first and/or second operating member. Brakes 76, 77 are for this purpose mutually connected (see Figure 6) by means of a brake cable (not shown) and the brake cable engages on the first and/or second operating member.

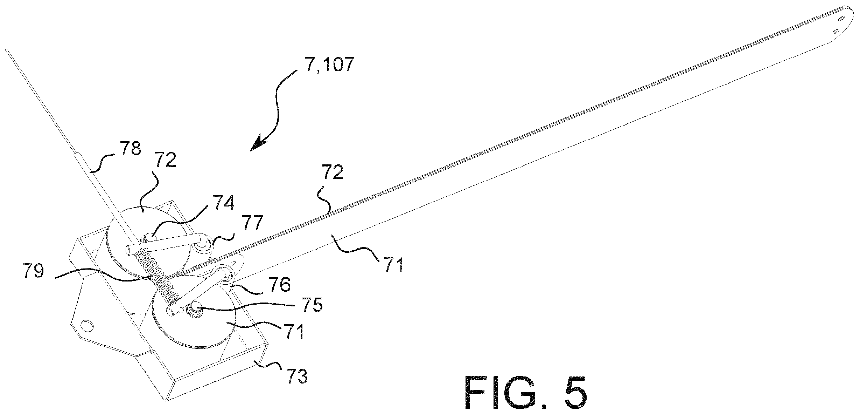

Figure 5 shows the first or second adjusting means 7, 107 according to Figure 4 in loaded state, wherein the leaf springs of constant-force springs 71, 72 are at least partially unwound. Owing to the disposition of force springs 71, 72 the unwound parts of the leaf springs together form a straight leaf. Brakes 76 and 77 can be operated via a shared brake cable 78. Brakes 76, 77 are automatically released by spring 79 when brake cable 78 is not being operated.

Figure 6 shows an application of frame 100 according to Figure 2 in a desk 20 with a double top. Desk 20 is provided with the frame 100 according to the invention. Frame 100 is connected here at first and second beams 2, 4 to legs 21, 22 which are connected to feet 25, 26. Desk top 23 is connected via first and second coupling elements 8, 9 to frame 100 by means of support beams 50, 51 which form the first and second device. Desk top 24 is connected in the same way to frame 100 via third and fourth coupling elements 108, 109 (not shown).

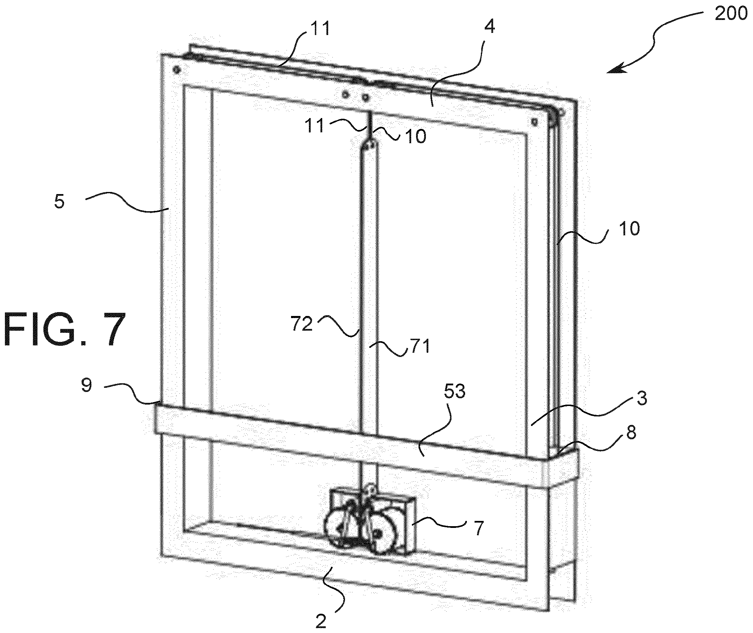

Figure 7 shows a further embodiment of frame 200 according to the invention, wherein for instance a painting or screen can be hung on a flat vertical surface such as a wall via a first device 53. First device 53 is connected for this purpose to first and second coupling elements 8, 9. Adjusting means 7 are placed here close to the centre of lower beam 2.

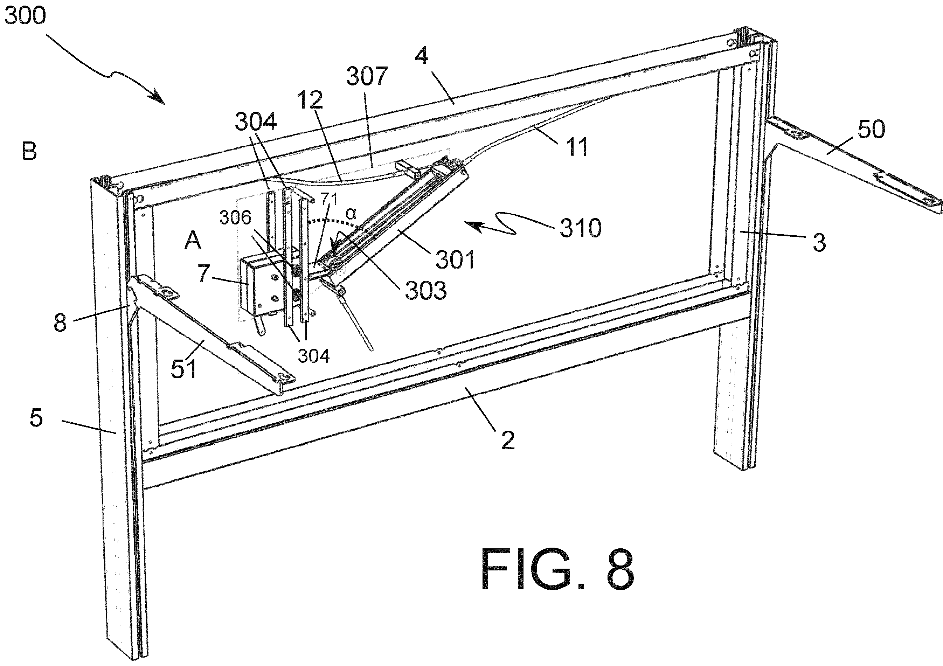

Figure 8 shows an optimized embodiment of frame 300 according to the invention. In frame 300 the first adjusting means 7 are arranged for displacement along a first path in frame 300, and first and second cords 10;11 are connected at an angle α adjustable relative to the first path to first adjusting means 7. Frame 300 is provided for this purpose with a first guide channel 301. The housing of first adjusting means 7 is provided on either side with (corresponding) wheels 306. Placed on frame 300 are two pairs of parallel placed strips 304, wherein each pair encloses the wheels 306 placed on a side of the housing. Strips 304 define the first path. The first guide channel 301 is mounted rotatably on frame 300 directly or indirectly at a first outer end and extends from the first outer end substantially in the direction of the first path. The angle α between the longitudinal direction of first guide channel 301 and the first path is adjustable between preferably 45 and 90 degrees, for instance by means of a spindle (not shown) which can change the position of guide channel 301. First adjusting means 7 are connected to first and second cords 10;11 by means of a first guide element 303, wherein first guide element 303 is displaceable in guiding manner between the first and a second outer end of first guide channel 301.

The first path is preferably vertical and the first side of first guide channel 301 is placed close to the centre of upper beam 4.

Strips 304, first adjusting means 7, first guide element 303 and first guide channel 301 are preferably arranged between two parallel placed plates 307, one of which is shown. This combination forms a module 310 which can be mounted or detached in its entirety on or from frame 300.

The first path need not per se be straight. The first path can for instance also form a part of a circular path or an elliptical path.

In Figure 8 the angle α between the longitudinal direction of first guide channel 301 and the first path is about 45 degrees, and in the shown embodiment is the minimal angle. In this position the pulling force exerted by adjusting means 7 on the first and second cords 10;11 is minimal. If in the shown embodiment the second side of guide channel 301 is displaced toward upper beam 4, the angle α between the longitudinal direction of first guide channel 301 and the first path also increases, and adjusting means 7 will displace in the direction of upper beam 4 so as to follow the guide channel 301. As this angle α increases, the pulling force exerted by adjusting means 7 on first and second cords 10;11 will also increase. The pulling force is maximal when the angle α nears 90 degrees.

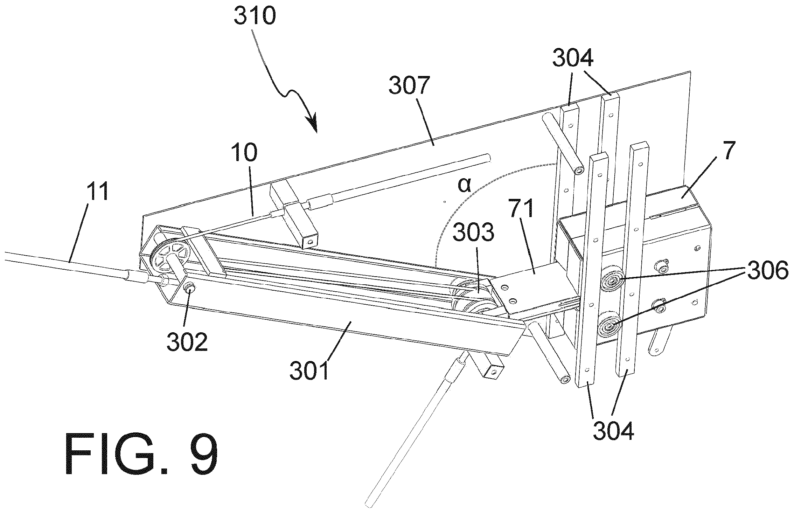

Figure 9 shows module 310 for applying in frame 300 according to the invention. Module 310 comprises two parallel placed plates 307, one of which is not shown. Strips 304, the first adjusting means, first guide element 303 and first guide channel 301 are arranged between plates 307. First guide channel 301 is mounted rotatably by means of a pin-hole connection 302. The angle α between the longitudinal direction of first guide channel 301 and the first path nears 90 degrees in the shown figure. The pulling force exerted by adjusting means 7 on first and second cords 10;11 is approximately maximal in this position.

The invention is of course not limited to the described and shown preferred embodiment, but extends to any embodiment falling within the scope of protection as defined in the claims and as seen in the light of the foregoing description and accompanying drawings.

## Claims

1. Rectangular frame (1, 100, 200, 300), which frame (1, 100, 200, 300) is formed by at least a first upright (3), upper beam (4), second upright (5) and lower beam (2), wherein the frame (1, 100, 200, 300) is provided with first coupling means and the frame (1, 100, 200, 300) is configured for coupling of a first device, such as a desk top, black/whiteboard or painting, to a first side (A) of the frame (1, 100, 200, 300) by means of the first coupling means, wherein the frame (1, 100, 200, 300) is also configured for adjustable placing of the first device in the height relative to the frame (1, 100, 200, 300), wherein the frame (1, 100, 200, 300) is provided with first adjusting means (7) for adjusting the first coupling means and a first operating member for operating the first adjusting means (7), wherein the first coupling means comprise a first and second coupling element (8, 9), which first and second coupling elements (8, 9) are arranged for simultaneous adjustable displacement to substantially the same height in respectively the first and second upright (3, 5) and are connected respectively by means of a first and second cord (10, 11) to the first adjusting means (7), **characterized in that** the first adjusting means (7) comprise at least one constant-force spring (71, 72), wherein a first outer end of each constant-force spring (71, 72) is connected to both the first and the second cord (11).

2. Frame (1, 100, 200, 300) as claimed in claim 1, **characterized in that** the frame (1, 100, 200, 300) is also configured for adjustable placing in the height relative to the frame (1, 100, 200, 300) of a second device, such as a desk top, black/whiteboard or painting, for coupling to a second side (B) of the frame (1, 100, 200, 300), wherein the frame (1, 100, 200, 300) is provided with second coupling means for coupling of the second device, second adjusting means (107) for adjusting the second coupling means and a second operating member for operating the second adjusting means (107), wherein the second coupling means comprise a third and fourth coupling element (108, 109), which third and fourth coupling elements (108, 109) are arranged for simultaneous adjustable displacement to substantially the same height in respectively the first and second upright (3, 5), and are connected respectively by means of a third and fourth cord (110, 111) to the second adjusting means (107), wherein the second adjusting means (107) comprise at least one constant-force spring (71, 72), wherein a first outer end of each constant-force spring (71, 72) of the second adjusting means (107) is connected to both the third and the fourth cord (111).

3. Frame (1, 100, 200, 300) as claimed in claim 1 or 2, wherein the first and/or second adjusting means (7, 107) comprise a housing (73) which substantially comprises each constant-force spring (71, 72) in unloaded state, wherein a second outer end of each constant-force spring (71, 72) is connected fixedly to the housing (73).

4. Frame (1, 100, 200, 300) as claimed in claim 1, 2 or 3, wherein each constant-force spring (71, 72) is provided with a brake (76, 77) which engages on the constant-force spring (71, 72), and which brake (76, 77) can be operated via the first and/or second operating member.

5. Frame (1, 100, 200, 300) as claimed in claim 4, wherein the brakes (76, 77) of each constant-force spring (71, 72) are mutually connected by means of a brake cable (78) and the first and/or second operating member engages on the brake cable (78).

6. Frame (1, 100, 200, 300) as claimed in any of the claims 3-5, wherein the first and/or second adjusting means (7, 107) comprise a number of pairs of constant-force springs (71, 72), wherein each force spring comprises a rolled-up leaf spring, and each pair of leaf springs is placed in mirrored arrangement in the frame (1, 100, 200, 300) such that the outer sides of the unrolled parts of each pair of leaf springs are adjacent.

7. Frame (1, 100, 200, 300) as claimed in claim 6, wherein the first and/or second adjusting means (7, 107) comprise one pair of constant-force springs (71, 72).

8. Frame (1, 100) as claimed in any of the claims 1-7, wherein the first adjusting means (7) are placed close to a bottom corner of the frame (1, 100, 200, 300) and the first and second cords (10, 11) are connected to the first adjusting means (7) at an angle of about 30 to 60 degrees relative to the lower beam (2).

9. Frame (1, 100) as claimed in any of the claims 2-8, wherein the second adjusting means (107) are placed close to a bottom corner of the frame (1, 100, 200, 300) and the third and fourth cords (110, 111) are connected to the second adjusting means (107) at an angle of about 30 to 60 degrees relative to the lower beam (2).

10. Frame (1, 100) as claimed in claim 9, wherein the first and second adjusting means (107) are placed close to different bottom corners.

11. Frame (1, 100, 200, 300) as claimed in any of the claims 3-7, wherein the first adjusting means (7) are arranged for displacement along a first path in the frame (1, 100, 200, 300) and the first and second cords (10, 11) are connected to the first adjusting means (7) at an angle (α) adjustable relative to the first path.

12. Frame (1, 100, 200, 300) as claimed in claim 11, wherein the frame (1, 100, 200, 300) is provided with a first guide channel (301) which is mounted rotatably at a first outer end on the frame (1, 100, 200, 300) and which extends from the first outer end substantially in the direction of the first path, wherein the angle (α) between the longitudinal direction of the first guide channel (301) and the first path is adjustable and the first adjusting means (7) are connected to the first and second cords (10, 11) by means of a first guide element (303), wherein the first guide element (303) is displaceable in guiding manner between the first and a second outer end of the first guide channel (301).

13. Frame (1, 100, 200, 300) as claimed in any of the claims 3-7, 11 or 12, wherein the second adjusting means (107) are arranged for displacement along a second path in the frame (1, 100, 200, 300) and the third and fourth cords (110, 111) are connected to the second displacing means (107) at an angle (α) adjustable relative to the second path.

14. Frame (1, 100, 200, 300) as claimed in claim 13, wherein the frame (1, 100, 200, 300) is provided with a second guide channel which is mounted rotatably at a first outer end on the frame (1, 100, 200, 300) and which extends from the first outer end substantially in the direction of the second path, wherein the angle between the longitudinal direction of the second guide channel and the second path is adjustable and the second adjusting means (107) are connected to the third and fourth cords (110, 111) by means of a second guide element, wherein the second guide element is displaceable in guiding manner between the first and a second outer end of the second guide channel.

15. Frame (1, 200) as claimed in any of the claims 1-6, wherein the first coupling element (10) and second coupling element (11) are mutually connected by means of a connecting element (53).

16. Frame (1, 200) as claimed in claim 15, wherein the first adjusting means (7) are arranged close to the centre of the lower beam (2).

17. Frame (1, 100, 200, 300) as claimed in any of the foregoing claims, wherein the upper beam (4) and lower beam (2) are adjustable in the length.

18. Frame (1, 100, 200, 300) as claimed in any of the foregoing claims, wherein the first, second, third and/or fourth cord (10, 11, 110, 111) comprise a Bowden cable.

19. Frame (1, 100, 200, 300) as claimed in any of the foregoing claims, wherein the first and second uprights (3, 5) are height-adjustable.

20. Frame (1, 100, 200, 300) as claimed in any of the foregoing claims, wherein the first and/or second side (A, B) of the first and second uprights (3, 5) are provided with a guide track (11) which is configured to enclose a coupling element (8, 9, 108, 109) and to guide the coupling element (8, 9, 108, 109) in the height.

## Patentansprüche

1. Rechteckiger Rahmen (1, 100, 200, 300), welcher Rahmen (1 , 100, 200, 300) durch mindestens einen ersten senkrechten Rahmenstab (3), einen oberen waagerechten Rahmenstab (4), einen zweiten senkrechten Rahmenstab (5) und einen unteren waagerechten Rahmenstab (2) gebildet wird, wobei der Rahmen (1, 100, 200, 300) mit ersten Kopplungsmitteln versehen ist und der Rahmen (1, 100, 200, 300) zur Kopplung einer ersten Vorrichtung, wie z.B. ein Bildschirm, eine schwarze oder weiße Tafel oder ein Gemälde, mit einer ersten Seite (A) des Rahmens (1, 100, 200, 300) mittels des ersten Kopplungsmittels konfiguriert ist, wobei der Rahmen (1, 100, 200, 300) auch für eine einstellbare Platzierung der ersten Vorrichtung in der Höhe relativ zu dem Rahmen (1, 100, 200, 300) konfiguriert ist, wobei der Rahmen (1, 100, 200, 300) mit ersten Einstellmitteln (7) zum Einstellen der ersten Kopplungsmittel und eines ersten Betätigungselements zum Betätigen der ersten Einstellmittel (7) versehen ist, wobei das erste Kopplungsmittel ein erstes und ein zweites Kopplungselement (8, 9) umfasst, wobei das erste und das zweite Kopplungselement (8, 9) für eine gleichzeitige einstellbare Verschiebung auf im Wesentlichen die gleiche Höhe in jeweils dem ersten bzw. dem zweiten senkrechten Rahmenstab (3, 5) angeordnet sind und jeweils mittels einer ersten und zweiten Schnur (10, 11) mit den ersten Einstellmitteln (7) verbunden sind, **dadurch gekennzeichnet, dass** die ersten Einstellmittel (7) mindestens eine Konstantkraftfeder (71, 72) umfassen, wobei ein erstes äußeres Ende jeder Konstantkraftfeder (71, 72) sowohl mit der ersten als auch mit der zweiten Schnur (11) verbunden ist.

2. Rahmen (1, 100, 200, 300) nach Anspruch 1, **dadurch gekennzeichnet, dass** der Rahmen (1, 100, 200, 300) auch für eine einstellbare Anordnung in der Höhe relativ zum Rahmen (1, 100, 200, 300) einer zweiten Vorrichtung, wie z.B. ein Bildschirm, eine schwarze oder weiße Tafel oder ein Gemälde, zur Kopplung mit einer zweiten Seite (B) des Rahmens (1, 100, 200, 300) konfiguriert ist, wobei der Rahmen (1, 100, 200, 300) mit zweiten Kopplungsmittel zum Koppeln der zweiten Vorrichtung, eines zweiten Einstellmittels (107) zum Einstellen der zweiten Kopplungsmittel und eines zweiten Betätigungselements zum Betätigen des zweiten Einstellmittels (107) versehen ist, wobei die zweiten Kopplungsmittel ein drittes und viertes Kopplungselement (108, 109) umfassen, wobei die dritten und vierten Kopplungselemente (108, 109) für eine gleichzeitige einstellbare Verschiebung auf im Wesentlichen die gleiche Höhe in jeweils dem ersten bzw. zweiten senkrechten Rahmenstab (3, 5) angeordnet sind und jeweils mittels einer dritten und vierten Schnur (110, 111) mit dem zweiten Einstellmittel (107) verbunden sind, wobei die zweiten Einstellmittel (107) mindestens eine Konstantkraftfeder (71 , 72) aufweisen, wobei ein erstes äußeres Ende jeder Konstantkraftfeder (71 , 72) der zweiten Einstellmittel (107) sowohl mit der dritten als auch mit der vierten Schnur (111) verbunden sind.

3. Rahmen (1, 100, 200, 300) nach Anspruch 1 oder 2, wobei die ersten und/oder zweiten Einstellmittel (7, 107) ein Gehäuse (73) umfassen, das im Wesentlichen jede Konstantkraftfeder (71, 72) im unbelasteten Zustand umfasst, wobei ein zweites äußeres Ende jeder Konstantkraftfeder (71, 72) fest mit dem Gehäuse (73) verbunden ist.

4. Rahmen (1, 100, 200, 300) nach Anspruch 1, 2 oder 3, wobei jede Konstantkraftfeder (71, 72) mit einer Bremse (76, 77) versehen ist, die an der Konstantkraftfeder (71, 72) angreift, und wobei die Bremse (76, 77) über das erste und/oder zweite Betätigungselement betätigt werden kann.

5. Rahmen (1, 100, 200, 300) nach Anspruch 4, wobei die Bremsen (76, 77) jeder Konstantkraftfeder (71, 72) mittels eines Bremskabels (78) miteinander verbunden sind und das erste und/oder zweite Betätigungselement an dem Bremskabel (78) angreift.

6. Rahmen (1, 100, 200, 300) nach einem der Ansprüche 3-5, wobei das erste und/oder zweite Einstellmittel (7, 107) eine Anzahl von Paaren von Konstantkraftfedern (71, 72) umfasst, wobei jede Kraftfeder eine aufgerollte Blattfeder umfasst und jedes Paar Blattfedern in gespiegelter Anordnung in dem Rahmen (1, 100, 200, 300) so angeordnet ist, dass die Außenseiten der abgerollten Teile jedes Paares von Blattfedern aneinander grenzen.

7. Rahmen (1, 100, 200, 300) nach Anspruch 6, wobei das erste und/oder zweite Einstellmittel (7, 107) ein Paar Konstantkraftfedern (71, 72) umfasst.

8. Rahmen (1, 100) nach einem der Ansprüche 1-7, wobei die ersten Einstellmittel (7) nahe einer unteren Ecke des Rahmens (1, 100, 200, 300) angeordnet sind und die ersten und zweiten Schnüre (10, 11) mit den ersten Einstellmitteln (7) in einem Winkel von etwa 30 bis 60 Grad relativ zum unteren Balken (2) verbunden sind.

9. Rahmen (1, 100) nach einem der Ansprüche 2-8, wobei die zweiten Einstellmittel (107) nahe einer unteren Ecke des Rahmens (1, 100, 200, 300) angeordnet sind und die dritte und vierte Schnur (110, 111) mit den zweiten Einstellmitteln (107) in einem Winkel von etwa 30 bis 60 Grad relativ zum unteren Balken (2) verbunden sind.

10. Rahmen (1, 100) nach Anspruch 9, wobei das erste und das zweite Einstellmittel (107) nahe an verschiedenen unteren Ecken angeordnet sind.

11. Rahmen (1, 100, 200, 300) wie in einem der Ansprüche 3-7 beansprucht, wobei die ersten Einstellmittel (7) zur Verschiebung entlang eines ersten Weges in dem Rahmen (1, 100, 200, 300) angeordnet sind und die ersten und zweiten Schnüre (10, 11) mit den ersten Einstellmitteln (7) in einem Winkel (α) verbunden sind, der relativ zum ersten Weg einstellbar ist.

12. Rahmen (1, 100, 200, 300) nach Anspruch 11, wobei der Rahmen (1 , 100, 200, 300) mit einem ersten Führungskanal (301) versehen ist, der drehbar an einem ersten äußeren Ende an dem Rahmen (1 , 100, 200, 300) montiert ist und der sich von dem ersten äußeren Ende im Wesentlichen in Richtung des ersten Weges erstreckt, wobei der Winkel (α) zwischen der Längsrichtung des ersten Führungskanals (301) und dem ersten Weg einstellbar ist und die ersten Einstellmittel (7) mit den ersten und zweiten Schnüren (10, 11) mittels eines ersten Führungselements (303) verbunden sind, wobei das erste Führungselement (303) in führender Weise zwischen dem ersten und einem zweiten äußeren Ende des ersten Führungskanals (301) verschiebbar ist.

13. Rahmen (1, 100, 200, 300) wie in einem der Ansprüche 3-7, 11 oder 12 beansprucht, wobei die zweiten Einstellmittel (107) zur Verschiebung entlang eines zweiten Weges im Rahmen (1, 100, 200, 300) angeordnet sind und die dritte und vierte Schnur (110, 111) mit den zweiten Verschiebungsmitteln (107) in einem Winkel (α) verbunden sind, der relativ zum zweiten Weg einstellbar ist.

14. Rahmen (1, 100, 200, 300) nach Anspruch 13, wobei der Rahmen (1, 100, 200, 300) mit einem zweiten Führungskanal versehen ist, der drehbar an einem ersten äußeren Ende an dem Rahmen (1, 100, 200, 300) montiert ist und der sich von dem ersten äußeren Ende im Wesentlichen in Richtung des zweiten Weges erstreckt, wobei der Winkel zwischen der Längsrichtung des zweiten Führungskanals und der zweiten Bahn einstellbar ist und die zweiten Einstellmittel (107) mit dem dritten und vierten Schnüren (110, 111) mittels eines zweiten Führungselements verbunden sind, wobei das zweite Führungselement zwischen dem ersten und einem zweiten äußeren Ende des zweiten Führungskanals führend verschiebbar ist.

15. Rahmen (1, 200) nach einem der Ansprüche 1-6, wobei das erste Kopplungselement (10) und das zweite Kopplungselement (11) mittels eines Verbindungselements (53) miteinander verbunden sind.

16. Rahmen (1, 200) nach Anspruch 15, wobei die ersten Einstellmittel (7) nahe der Mitte des unteren waagerechten Rahmenstabs (2) angeordnet sind.

17. Rahmen (1, 100, 200, 300) nach einem der vorstehenden Ansprüche, wobei der obere waagerechte Rahmenstab (4) und der untere waagerechte Rahmenstab (2) in der Länge verstellbar sind.

18. Rahmen (1, 100, 200, 300) nach einem der vorstehenden Ansprüche, wobei die erste, zweite, dritte und/oder vierte Schnur (10, 11, 110, 111) einen Bowdenzug umfasst.

19. Rahmen (1, 100, 200, 300) wie in einem der vorstehenden Ansprüche beansprucht, wobei die ersten und zweiten senkrechte Rahmenstäbe (3, 5) höhenverstellbar sind.

20. Rahmen (1, 100, 200, 300) nach einem der vorstehenden Ansprüche, wobei die erste und/oder zweite Seite (A, B) des ersten und zweiten senkrechten Rahmenstabs (3, 5) mit einer Führungsschiene (11) versehen sind, die so konfiguriert ist, dass sie ein Kopplungselement (8, 9, 108, 109) umschließt und das Kopplungselement (8, 9, 108, 109) vertikal führt.

## Revendications

1. Cadre rectangulaire (1, 100, 200, 300), lequel cadre (1, 100, 200, 300) est formé par au moins un premier montant (3), une poutre supérieure (4), un deuxième montant (5) et une poutre inférieure (2), le cadre (1, 100, 200, 300) étant muni de premiers moyens d'accouplement et le cadre (1, 100, 200, 300) étant configuré pour accoupler un premier dispositif, tel qu'une plaque de bureau, un tableau noir/blanc ou une peinture, à un premier côté (A) du cadre (1, 100, 200, 300) au moyen des premiers moyens d'accouplement, le cadre (1, 100, 200, 300) étant également configuré pour placer le premier dispositif de façon réglable en hauteur par rapport au cadre (1, 100, 200, 300), le cadre (1, 100, 200, 300) étant muni de premiers moyens de réglage (7) pour régler les premiers moyens d'accouplement et d'un premier élément d'actionnement pour actionner les premiers moyens de réglage (7), les premiers moyens d'accouplement comprenant un premier et un deuxième élément d'accouplement (8, 9), lesquels premier et deuxième éléments d'accouplement (8, 9) étant conçus pour être déplacés simultanément de façon réglable à sensiblement la même hauteur dans le premier et le deuxième montant (3, 5) respectivement, et étant reliés aux premiers moyens de réglage (7) par le biais d'un premier et d'un deuxième cordon (10, 11) respectivement, **caractérisé en ce que** les premiers moyens de réglage (7) comprennent au moins un ressort à force constante (71, 72), une première extrémité extérieure de chaque ressort à force constante (71, 72) étant reliée à la fois au premier et au deuxième cordon (11).

2. Cadre (1, 100, 200, 300) selon la revendication 1, **caractérisé en ce que** le cadre (1, 100, 200, 300) est également configuré pour placer de façon réglable en hauteur par rapport au cadre (1, 100, 200, 300) un deuxième dispositif, tel qu'une plaque de bureau, un tableau noir/blanc ou une peinture, pour l'accoupler à un deuxième côté (B) du cadre (1, 100, 200, 300), le cadre (1, 100, 200, 300) étant muni de deuxièmes moyens d'accouplement pour accoupler le deuxième dispositif, de deuxièmes moyens de réglage (107) pour régler les deuxièmes moyens d'accouplement et d'un deuxième élément d'actionnement pour actionner les deuxièmes moyens de réglage (107), les deuxièmes moyens d'accouplement comprenant un troisième et un quatrième élément d'accouplement (108, 109), lesquels troisième et quatrième éléments d'accouplement (108, 109) sont conçus pour être déplacés simultanément de façon réglable à sensiblement la même hauteur dans le premier et le deuxième montant (3, 5) respectivement, et sont reliés aux deuxièmes moyens de réglage (107) par le biais d'un troisième et d'un quatrième cordon (110, 111) respectivement, les deuxièmes moyens de réglage (107) comprenant au moins un ressort à force constante (71, 72), une première extrémité extérieure de chaque ressort à force constante (71, 72) des deuxièmes moyens de réglage (107) étant reliée à la fois au troisième et au quatrième cordon (111).

3. Cadre (1, 100, 200, 300) selon la revendication 1 ou 2, dans lequel les premiers et/ou les deuxièmes moyens de réglage (7, 107) comprennent un boîtier (73) qui comprend essentiellement chaque ressort à force constante (71, 72) à l'état sans contrainte, une deuxième extrémité extérieure de chaque ressort à force constante (71, 72) étant reliée de manière fixe au boîtier (73).

4. Cadre (1, 100, 200, 300) selon la revendication 1, 2 ou 3, dans lequel chaque ressort à force constante (71, 72) est muni d'un frein (76, 77) qui agit sur le ressort à force constante (71, 72), et lequel frein (76, 77) peut être actionné par l'intermédiaire du premier et/ou du deuxième élément d'actionnement.

5. Cadre (1, 100, 200, 300) selon la revendication 4, dans lequel les freins (76, 77) de chaque ressort à force constante (71, 72) sont reliés entre eux au moyen d'un câble de frein (78)k et le premier et/ou le deuxième élément d'actionnement agit sur le câble de frein (78).

6. Cadre (1, 100, 200, 300) selon l'une quelconque des revendications 3 à 5, dans lequel les premiers et/ou deuxièmes moyens de réglage (7, 107) comprennent un certain nombre de paires de ressorts à force constante (71, 72), chaque ressort à force comprenant un ressort à lame enroulé, et chaque paire de ressorts à lame est placée dans le cadre (1, 100, 200, 300) selon un agencement en miroir de telle sorte que les faces extérieures des parties déroulées de chaque paire de ressorts à lame sont adjacentes.

7. Cadre (1, 100, 200, 300) selon la revendication 6, dans lequel les premiers et/ou les deuxièmes moyens de réglage (7, 107) comprennent une paire de ressorts à force constante (71, 72).

8. Cadre (1, 100) selon l'une des revendications 1 à 7, dans lequel les premiers moyens de réglage (7) sont placés à proximité d'un coin inférieur du cadre (1, 100, 200, 300) et les premier et deuxième cordons (10, 11) sont reliés aux premiers moyens de réglage (7) selon un angle d'environ 30 à 60 degrés par rapport à la poutre inférieure (2).

9. Cadre (1, 100) selon l'une quelconque des revendications 2 à 8, dans lequel les deuxièmes moyens de réglage (107) sont placés à proximité d'un coin inférieur du cadre (1, 100, 200, 300) et les troisième et quatrième cordons (110, 111) sont reliés aux deuxièmes moyens de réglage (107) selon un angle d'environ 30 à 60 degrés par rapport à la poutre inférieure (2).

10. Cadre (1, 100) selon la revendication 9, dans lequel les premier et deuxième moyens de réglage (107) sont placés à proximité de coins inférieurs différents.

11. Cadre (1, 100, 200, 300) selon l'une quelconque des revendications 3 à 7, dans lequel les premiers moyens de réglage (7) sont conçus pour se déplacer dans le cadre (1, 100, 200, 300) le long d'une première piste, et les premier et deuxième cordons (10, 11) sont reliés aux premiers moyens de réglage (7) selon un angle (α) réglable par rapport à la première piste.

12. Cadre (1, 100, 200, 300) selon la revendication 11, dans lequel le cadre (1, 100, 200, 300) est muni d'un premier canal de guidage (301) monté rotatif sur le cadre (1, 100, 200, 300) par une première extrémité extérieure et qui s'étend depuis la première extrémité extérieure sensiblement dans la direction de la première piste, l'angle (α) entre la direction longitudinale du premier canal de guidage (301) et la première piste étant réglable, et les premiers moyens de réglage (7) étant reliés aux premier et deuxième cordons (10, 11) au moyen d'un premier élément de guidage (303), le premier élément de guidage (303) pouvant être déplacé de façon guidée entre la première et une deuxième extrémité extérieure du premier canal de guidage (301).

13. Cadre (1, 100, 200, 300) selon l'une des revendications 3 à 7, 11 ou 12, dans lequel les deuxièmes moyens de réglage (107) sont conçus pour se déplacer dans le cadre (1, 100, 200, 300) le long d'une deuxième piste, et les troisième et quatrième cordons (110, 111) sont reliés aux deuxièmes moyens de déplacement (107) selon un angle (α) réglable par rapport à la deuxième piste.

14. Cadre (1, 100, 200, 300) selon la revendication 13, dans lequel le cadre (1, 100, 200, 300) est muni d'un deuxième canal de guidage monté rotatif sur le cadre (1, 100, 200, 300) par une première extrémité extérieure et qui s'étend depuis la première extrémité extérieure sensiblement dans la direction de la deuxième piste, l'angle entre la direction longitudinale du deuxième canal de guidage et la deuxième piste étant réglable, et les deuxièmes moyens de réglage (107) étant reliés aux troisième et quatrième cordons (110, 111) au moyen d'un deuxième élément de guidage, le deuxième élément de guidage pouvant être déplacé de façon guidée entre la première et une deuxième extrémité extérieure du deuxième canal de guidage.

15. Cadre (1, 200) selon l'une des revendications 1 à 6, dans lequel le premier élément d'accouplement (10) et le deuxième élément d'accouplement (11) sont reliés entre eux au moyen d'un élément de liaison (53).

16. Cadre (1, 200) selon la revendication 15, dans lequel les premiers moyens de réglage (7) sont disposés à proximité du centre de la poutre inférieure (2).

17. Cadre (1, 100, 200, 300) selon l'une quelconque des revendications précédentes, dans lequel la poutre supérieure (4) et la poutre inférieure (2) sont réglables en longueur.

18. Cadre (1, 100, 200, 300) selon l'une quelconque des revendications précédentes, dans lequel le premier, le deuxième, le troisième et/ou le quatrième cordon (10, 11, 110, 111) comprennent un câble Bowden.

19. Cadre (1, 100, 200, 300) selon l'une quelconque des revendications précédentes, dans lequel le premier et le deuxième montant (3, 5) sont réglables en hauteur.

20. Cadre (1, 100, 200, 300) selon l'une quelconque des revendications précédentes, dans lequel le premier et/ou le deuxième côté (A, B) du premier et du deuxième montant (3, 5) sont munis d'une voie de guidage (11) qui est configurée pour enfermer un élément d'accouplement (8, 9, 108, 109) et pour guider l'élément d'accouplement (8, 9, 108, 109) en hauteur.
